# EUROPÄISCHE PATENTSCHRIFT

(11) **EP 3 943 268 B1**
(45) Veröffentlichungstag und Bekanntmachung des Hinweises auf die Patenterteilung: **03.01.2024**
(21) Anmeldenummer: 21187108.2
(22) Anmeldetag: 22.07.2021
(51) Int. Cl.: B29B 17/02, B29C 48/275, B29C 48/69, B29C 48/92

(54) **VERFAHREN UND EINRICHTUNG ZUM TRENNEN UNTERSCHIEDLICHER KUNSTSTOFFSORTEN VON EINEM MATERIALGEMISCH**
METHOD AND DEVICE FOR SEPARATING DIFFERENT TYPES OF PLASTIC MATERIALS FROM A MIXTURE
PROCÉDÉ ET ÉQUIPEMENT DE SÉPARATION DE DIFFÉRENTS TYPES DE MATIÈRE PLASTIQUE D'UN MÉLANGE DE MATÉRIAUX

(30) Priorität: 23.07.2020 DE 102020119505
(43) Veröffentlichungstag der Anmeldung: 26.01.2022
(73) Patentinhaber: Endres, Hans-Josef, Prof. Dr. Ing., 30890 Barsinghausen (DE)
(72) Erfinder: Endres, Hans-Josef, Prof. Dr. Ing., 30890 Barsinghausen (DE)
(74) Vertreter: Kröncke, Rolf

(56) Entgegenhaltungen:
- WO-A1-2020/104434
- DE-A1- 2 837 621
- DE-T2- 69 507 868
- US-A- 3 726 955
- US-A1- 2019 283 278

## Beschreibung

Die Erfindung betrifft ein Verfahren zum Trennen unterschiedlicher Kunststoffsorten von oder in einem Materialgemisch gemäß den Merkmalen des Anspruchs 1. Die Erfindung betrifft außerdem eine Einrichtung zum Trennen unterschiedlicher Kunststoffsorten von einem Materialgemisch gemäß den Merkmalen des Anspruchs 8. Allgemein betrifft die Erfindung das Gebiet des Recyclings von Kunststoffmaterialien. Für ein effizientes und hochwertiges Kunststoff-Recycling sind möglichst sortenreine Kunststoffmaterialien erwünscht, die für die Verarbeitung in einer kunststoffverarbeitenden Anlage geeignet sind. Mit bisherigen Ansätzen gelingt es in vielen Fällen nicht, solche sortenreinen Kunststoffmaterialien aus zu recycelnden Kunststoffen wirtschaftlich zu gewinnen.

Bei vielen Produkten werden zur Optimierung der Gebrauchsperformance eines Materials oder Produkts verschiedene Kunststoffe bisher untrennbar miteinander kombiniert. Beispiele für derartige Produkte sind im Verpackungsbereich etablierte Multilayerfolien, die aus bis zu 6 oder 8 verschiedenen Kunststoffen bestehen können, oder Textilien, bei denen häufig Mischgewebe gegebenenfalls noch mit zusätzlicher Beschichtung eingesetzt werden. Darüber hinaus sind viele Polymerwerkstoffe sogenannte Kunststoffblends, bei denen zur Optimierung der Verarbeitungs- und Gebrauchseigenschaften verschiedene Polymere auf mikrostruktureller Ebene miteinander vermischt werden.

Eine weitere recyclingtechnische Herausforderung sind Verstärkungskomponenten, Füllstoffe, Klebstoffe, Papier oder Kunststoffkaschierungen. Für derartige Materialgemische gibt es derzeit noch keine zufriedenstellenden Recyclingmethoden. Daher werden solche Materialgemische häufig verbrannt oder auf Deponien gelagert.

Aus der DE 695 07 868 T2 ist ein Verfahren zur Abtrennung von Polymeren aus Polymermischungen bekannt. Aus der US 2019/0283278 A1 sind Systeme und Verfahren für die Herstellung kontinuierlicher Filamente aus farbigem Recycling-PET bekannt. Aus der WO 2020/104434 A1 ist ein Verfahren und eine Vorrichtung zum Schmelzspinnen von Filamenten bekannt. Aus der DE 28 37 621 A1 ist ein Verfahren und eine Einrichtung zur Trennung und Rückgewinnung von thermoplastischen Kunststoffen aus Kunststoffmüll bekannt. Aus der US 3,726,955 ist ein Prozess für die Herstellung von Filamenten und Garnen aus gemischten inkompatiblen Polymeren bekannt.

Der Erfindung liegt die Aufgabe zu Grunde, das Recycling einzelner Kunststoffsorten oder Kunststoffgemische in solchen Materialgemischen zu verbessern. Ein Ziel sind möglichst sortenreine Kunststoffrecyclate aus gemischten Abfällen und Materialverbünden.

Diese Aufgabe wird mit einem Verfahren zum Trennen unterschiedlicher Kunststoffsorten von einem Materialgemisch gemäß Anspruch 1 gelöst. Das Verfahren umfasst:
a) Zuführen des Materialgemischs,
b) Aufschmelzen wenigstens eines Teils des Materialgemischs,
c) Separieren von einer oder mehreren Kunststoffsorten, die im aufgeschmolzenen Teil des Materialgemischs enthalten sind, von dem Materialgemisch anhand der spezifischen Schmelzviskosität der jeweiligen geschmolzenen Kunststoffsorte.

Vorteilhafterweise basiert die Erfindung darauf, Kunststoffgemische und Polymerverbünde anhand der unterschiedlichen Schmelzviskositäten der einzelnen Bestandteile, d.h. der verschiedenen Kunststoffsorten, voneinander zu trennen. Dabei können aus dem aufgeschmolzenen Teil des Materialgemischs mehrere Kunststoffsorten, die noch miteinander vermischt sind, separiert werden, oder eine jeweilige einzelne (sortenreine) Kunststoffsorte. Das Materialgemisch kann z.B. auch Kompositmaterialien aufweisen, z.B. Faserverbundwerkstoffe wie NFK, CFK, GFK, AFK.

Das Separieren einer oder mehrerer Kunststoffsorten aus dem Materialgemisch anhand der Schmelzviskosität kann zum Beispiel durch Verwendung eines oder mehrerer Schmelzefilter erfolgen. Dabei können vorteilhafterweise handelsübliche Schmelzefilter oder daraus zusammengesetzte Filterkaskaden verwendet werden, wie sie beispielsweise in der kunststoffverarbeitenden Industrie eingesetzt werden, zum Beispiel in Extrusionsanlagen. Beispielsweise können kontinuierliche Siebwechsler oder Hochleistungsschmelzefilter der Typen ERF 200, 350, 500 eingesetzt werden. Solche Schmelzefilter dienen dort dazu, Feststoffe wie Papier, Metall oder Ähnliches aus der Kunststoffschmelze zu entfernen, damit das Kunststoffmaterial nicht verunreinigt ist, wenn es verarbeitet wird. Bei der vorliegenden Erfindung wird dagegen vorgeschlagen, dass mittels eines solchen Schmelzefilters eine Trennung zwischen hochviskosen und niedrigviskosen Anteilen der Schmelze erfolgt. Unterschiedliche Kunststoffsorten unterscheiden sich anhand ihrer spezifischen Schmelzviskosität im aufgeschmolzenen Zustand. Diese Eigenschaft kann vorteilhaft für das Recycling von sortenreinen Kunststoffen genutzt werden. Dadurch können einzelne oder mehrere Kunststoffsorten, die noch miteinander vermischt sind, separiert werden. Alternativ oder gleichzeitig können nicht-Kunststoffanteile separiert werden, wie sie in Kompositen einschließlich NFK, CFK, GFK oder AFK vorliegen.

Die Erfindung betrifft daher auch die Verwendung eines Schmelzefilters zum Separieren einer Kunststoffsorte, die im geschmolzenen Zustand eine erste Schmelzviskosität hat, von einer anderen Kunststoffsorte, die im geschmolzenen Zustand eine zweite Schmelzviskosität hat, die sich von der ersten Schmelzviskosität unterscheidet, oder von anderen Bestandteilen eines Kunststoffgemisches oder Kompositmaterials, insbesondere von Fasern eines Kompositmaterials.

Die Viskosität bezeichnet die Zähflüssigkeit oder Zähigkeit von Fluiden, d.h. Flüssigkeiten und Gasen. Je höher die Viskosität ist, desto dickflüssiger (weniger fließfähig) ist das Fluid; je niedriger die Schmelzviskosität, desto dünnflüssiger (fließfähiger) ist es. Die Viskosität kann insbesondere der Widerstand des Fluids gegenüber Scherung sein (Scherviskosität).

Unter der Schmelzviskosität wird die Viskosität einer Kunststoffsorte in der schmelzflüssigen Phase am Schmelzpunkt oder bei anderen Bedingungen verstanden.

Soweit das Materialgemisch nicht vollständig aufgeschmolzen werden kann, d.h. wenn feste Bestandteile verbleiben, kann zunächst eine Abtrennung dieser festen Bestandteile durchgeführt werden.

Gemäß einer vorteilhaften Ausgestaltung der Erfindung ist vorgesehen, dass mehrere oder alle Kunststoffsorten, die im aufgeschmolzenen Teil des Materialgemischs enthalten sind, jeweils anhand der spezifischen Schmelzviskosität der jeweiligen geschmolzenen Kunststoffsorte einzeln separiert werden. Dabei können die einzelnen Viskositäten oder die Viskositätsunterschiede der zu trennenden Komponenten auch jeweils gezielt mittels der weiteren unten beispielhaft beschriebenen Methoden beeinflusst werden. Durch diese physikalische, mechanische oder chemische Spreizung der Viskosität ist eine Abtrennung oder Auftrennung von Kunststoffsorten möglich. Dies hat den Vorteil, dass die Kunststoffsorten vollständig sortenrein separiert werden. Es kann somit die bestmögliche Recyclingqualität erreicht werden.

Gemäß der Erfindung ist vorgesehen, dass zumindest der aufgeschmolzene Teil des Materialgemischs nacheinander über verschiedene Filterstufen geführt wird, wobei jede Filterstufe zum Trennen von aufgeschmolzenen, niederviskosen und nicht aufgeschmolzenen oder höherviskosen Teilen des Materialgemischs in einem bestimmten Viskositätsbereich ausgebildet ist. Dies hat den Vorteil, dass die Separierung der unterschiedlichen Kunststoffsorten mit überschaubarem technischen Aufwand möglich ist. Insbesondere können die Filterstufen durch industriell erhältliche Schmelzefilter realisiert werden. Je nach Filterstufe sind die Schmelzefilter dann auf unterschiedliche Viskositätsgrenzwerte abzustimmen, die an die spezifische Schmelzviskosität der jeweils abzutrennenden Kunststoffsorte angepasst ist. Gleichzeitig können die Einzelviskositäten oder Viskositätsunterschiede an die jeweiligen Filter angepasst werden. Das heißt, nach jeder Abtrennung kann eine Änderung der Schmelzviskosität einzelner oder mehrerer Kunststoffsorten erfolgen durch chemische, physikalische oder mechanische Beeinflussung der Materialien, wie die Erzeugung von Kunststoffsorten zugeordneter Druck- bzw. Scherungsprofile, Zugabe von Schmelzviskosität veränderter Komponenten, Variation des Temperaturprofils, Variation der Filterstufe etc.

Gemäß einer vorteilhaften Ausgestaltung der Erfindung ist vorgesehen, dass die Filterstufen innerhalb einer Extrusionsanlage betrieben werden. Dies erlaubt eine einfache und kostengünstige Realisierung einer Recyclinganlage. Es können beispielsweise Extrusionsanlagen nach bekannten Konzepten genutzt werden. Hierbei müssen lediglich die Schmelzefilter entweder ergänzt oder auf die gewünschte spezifische Schmelzviskosität der abzutrennenden Kunststoffsorten angepasst werden.

Gemäß der Erfindung ist vorgesehen, dass in jeder Filterstufe die jeweilige Kunststoffsorte mit der höchsten Schmelzviskosität aus dem aufgeschmolzenen Teil des Materialgemischs separiert wird. Es wird somit jeweils die höherviskose Komponente an der jeweiligen Filterstufe aus dem aufgeschmolzenen Teil des Materialgemischs separiert. Hierdurch kann eine hohe Sortenreinheit der recycelten Kunststoffsorten gewährleistet werden.

Die Abtrennung kann durch Beeinflussung der Schmelzviskositäten einzelner oder mehrerer Kunststoffsorten gefördert werden, im Folgenden auch als Spreizung der Viskosität bezeichnet. Beispiele hierfür sind die folgenden:
Gemäß einer vorteilhaften Ausgestaltung der Erfindung ist vorgesehen, dass die Schmelzviskosität des aufgeschmolzenen Teils des Materialgemischs oder die Schmelzviskosität zumindest einer darin enthaltenen Kunststoffsorte, z.B. durch Erzeugung zugeordneter Temperaturprofile gezielt beeinflusst wird. Auf diese Weise kann die Recyclingqualität durch zusätzlichen Eingriff, zum Beispiel einen Steuerungseingriff oder einen Regelungseingriff, noch weiter verbessert werden.

Gemäß einer vorteilhaften Ausgestaltung der Erfindung ist vorgesehen, dass die Schmelzviskosität des aufgeschmolzenen Teils des Materialgemischs oder die Schmelzviskosität zumindest einer darin enthaltenen Kunststoffsorte durch zusätzliche lokale thermische, mechanische und/oder elektromagnetische Energieeinkopplung gezielt beeinflusst wird. Auf diese Weise kann durch die Energieeinkopplung die Recyclingqualität weiter verbessert werden. Eine mechanische Energieeinkopplung kann zum Beispiel durch Druckbeaufschlagung des aufgeschmolzenen Teils des Materialgemisches bei einem höheren Schergefälle erfolgen. Andere Arten der Energieeinkopplung können zum Beispiel Mikrowellen-, Ultraschall- oder Elektronenbestrahlung sein.

Gemäß einer vorteilhaften Ausgestaltung der Erfindung ist vorgesehen, dass die Schmelzviskosität des aufgeschmolzenen Teils des Materialgemischs oder die Schmelzviskosität zumindest einer darin enthaltenen Kunststoffsorte durch Zugabe wenigstens einer weiteren Substanz gezielt beeinflusst wird. Durch solche zusätzlichen Substanzen kann die Schmerzviskosität bestimmter Kunststoffsorten gezielt beeinflusst werden, so dass die Ausfilterung aus dem Materialgemisch vereinfacht wird. Durch Zugabe wenigstens einer weiteren Substanz kann zum Beispiel eine chemische Beeinflussung der Schmerzviskosität des aufgeschmolzenen Teils des Materialgemischs oder zumindest einer darin enthaltenen Kunststoffsorte gezielt beeinflusst werden. Beispielsweise können selektiv auf einzelne Komponenten des Materialgemischs wirkende Kettenverlängerer (zur Erhöhung der Viskosität), Vernetzungshilfsmittel, die in Kombination mit elektromagnetischer Strahlung einen bestimmten Kunststoff vernetzen (zur Erhöhung der Viskosität), ein prozesstechnisch gesteuerter thermisch und/oder chemisch induzierter Abbau des Molekulargewichts (zur Verringerung der Viskosität) und/oder spezifisch auf einzelne Kunststoffbestandteile wirkende Lösemittel (zur Verringerung der Viskosität) genutzt werden.

Darüber hinaus hängt die Viskosität einer Kunststoffschmelze von der Verformungsgeschwindigkeit bzw. dem Schergefälle ab. Mit zunehmender Verformungsgeschwindigkeit nimmt die Viskosität ab, auch als Strukturviskosität von Kunststoffen bezeichnet.

Außerdem kann die Viskosität auch durch physikalisch wirkende Mechanismen (z.B. Gase oder gasbildende Komponenten) verringert oder durch Füllstoffe erhöht werden.

Damit können auch die Viskositätsunterschiede der zu trennenden Materialkomponenten eingestellt und gegebenenfalls vergrößert werden, also eine Spreizung der Viskosität erfolgen.

Die eingangs genannte Aufgabe wird außerdem mit einer Einrichtung zum Trennen unterschiedlicher Kunststoffsorten von einem Materialgemisch gemäß Anspruch 8 gelöst. Auch hierdurch können die zuvor erläuterten Vorteile realisiert werden.

Gemäß einer vorteilhaften Ausgestaltung der Erfindung ist vorgesehen, dass die Einrichtung eine Extrusionsanlage aufweist, an der die verschiedenen Filterstufen als Filterkaskade angeordnet sind. Dies erlaubt eine einfache und kostengünstige Realisierung einer Recyclinganlage.

Die Viskositätsbereiche der verschiedenen Filterstufen können voneinander verschieden sein. Insbesondere kann jede Filterstufe einen eigenen, sich von anderen Filterstufen unterscheidenden Viskositätsgrenzwert aufweisen, der einen Grenzwert für die Schmelzviskosität der auszufilternden Schmelzeanteile darstellt.

Mit der Erfindung können bisher nicht wirtschaftlich trennbare Kunststoffgemische durch eine Kombination von Schmelzefilterkaskaden mit entsprechend gestalteten und kontinuierlich arbeitenden Filterstufen sowie graduellen Temperaturprofilen und gegebenenfalls zusätzlicher lokaler Energieeinkopplung, unterschiedlichen Drücken, zusätzlicher Zufuhr von viskositätsverändernd wirkenden Substanzen wirtschaftlich und effizient in die einzelnen Materialbestandteile/Kunststoffsorten aufgetrennt und einem höherwertigen Recycling zugeführt werden. Darüber hinaus ist eine Trennung von nicht-Kunststoffbestandteilen bei Kompositmaterialien möglich, z.B. eine Abtrennung von kurzfaserigen Materialien einschließlich Glas-, Carbon-, Zellulose- und Naturfasern.

Gegenüber bisherigen Recyclingansätzen stellt die vorliegende Erfindung ein robustes industrielles Verfahren zum wirtschaftlichen Trennen und Recycling von Materialgemischen und Materialverbünden mit hohem Kunststoffanteil da. Auch die Abtrennung nicht schmelzbarer Komponenten, wie beispielsweise Füllstoffen, Verstärkungsfasern oder von Baumwolle in einem Mischgewebe und ein Recycling der einzelnen Bestandteile ist mit der vorliegenden Erfindung möglich. Zudem erlaubt die Erfindung auch die wirtschaftliche Separierung und weitere Nutzung von minoren Materialkomponenten eines Kunststoffgemischs oder Materialverbundes, für die bisher eine wirtschaftliche Abtrennung nicht möglich war.

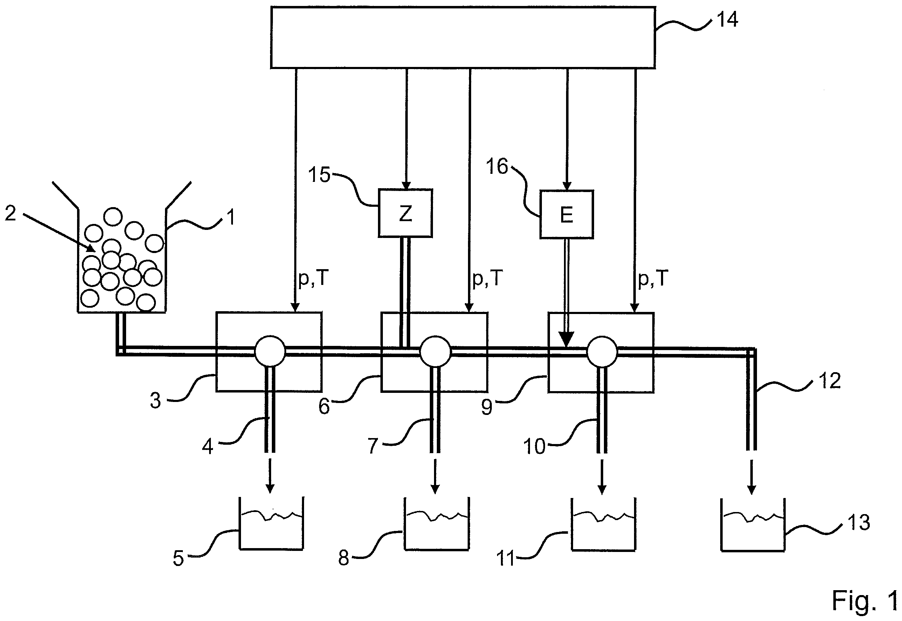

Die Erfindung wird nachfolgend anhand eines Ausführungsbeispiels unter Verwendung der Figur 1 näher erläutert.

Die Figur 1 zeigt eine Einrichtung zum Trennen unterschiedlicher Kunststoffsorten von oder in einem Materialgemisch 2. Es wird zunächst das Materialgemisch 2 zugeführt, zum Beispiel zu einem Vorratsbehälter 1. Das Materialgemisch 2 wird aufgeschmolzen, zum Beispiel durch Erwärmung des Vorratsbehälters 1 oder eines vorgeschalteten Extruderteils. Der aufgeschmolzene Teil des Materialgemischs 2 wird einem Filter oder einer Filterkaskade zugeführt, die eine erste Filterstufe 3, eine zweite Filterstufe 6 und eine dritte Filterstufe 9 aufweist.

Die erste Filterstufe 3 ist als Schmelzefilter mit einem ersten Viskositätsgrenzwert ausgebildet. Der erste Viskositätsgrenzwert ist ein relativ hochviskoser Grenzwert, d.h. es werden in der ersten Filterstufe 3 die hochviskosen Anteile aus der Schmelze abgetrennt. Beispielsweise wird eine erste Kunststoffsorte 4 abgetrennt und einem Auffangbehälter 5 zugeführt.

Die zweite Filterstufe 6 ist als Schmelzefilter mit einem zweiten Viskositätsgrenzwert ausgebildet, der zum Beispiel kleiner sein kann als der erste Viskositätsgrenzwert. Es wird in der zweiten Filterstufe 6 eine zweite Kunststoffsorte 7 abgetrennt, die einem Auffangbehälter 8 zugeführt wird.

Die dritte Filterstufe 9 ist als Schmelzefilter mit einem dritten Viskositätsgrenzwert ausgebildet, der zum Beispiel kleiner sein kann als der zweite Viskositätsgrenzwert. Es wird in der dritten Filterstufe 9 eine dritte Kunststoffsorte 10 abgetrennt, die einem Auffangbehälter 11 zugeführt wird.

Die in der dritten Filterstufe 9 verbleibenden Teile des aufgeschmolzenen Teils des Materialgemischs werden als Restmaterialstrom 12 einem Auffangbehälter 13 zugeführt.

Die beschriebene Einrichtung kann durch eine Steuereinheit 14 gesteuert werden. Beispielsweise kann die Steuereinheit 14 in jeder Filterstufe 3, 6, 9 die lokalen Druck- und Temperaturverhältnisse anhand von Drucksignalen p und Temperatursignalen T steuern und/oder regeln.

Es kann zudem eine Zugabe einer weiteren Substanz zum aufgeschmolzenen Teil des Materialgemischs durchgeführt werden. Dies ist beispielhaft bei der zweiten Filterstufe 6 dargestellt. Aus einem Behälter 15 wird eine zusätzliche Substanz Z dem Schmelzestrom in der zweiten Filterstufe 6 zugeführt. Die Zugabe, d.h. der Zeitpunkt und die Menge der Zugabe der zusätzlichen Substanz Z, kann durch die Steuereinheit 14 gesteuert oder geregelt werden.

Es kann zusätzlich die Schmelzviskosität des aufgeschmolzenen Teils des Materialgemischs oder zumindest einer darin enthaltenen Kunststoffsorte durch zusätzliche Energieeinspeisung E gezielt beeinflusst werden. Die Energieeinspeisung kann durch eine Energiequelle 16 erfolgen, die von der Steuereinheit 14 gesteuert oder geregelt werden kann.

Durch die Erzeugung entsprechender Temperaturprofile in Kombination mit einer solchen Schmelzfilterkaskade, die aus verschiedenen, hintereinander geschalteten kontinuierlich arbeitenden Filterstufen besteht, können solche Materialgemische in die einzelnen Bestandteile, d.h. die jeweiligen reinen Kunststoffsorten, aufgetrennt werden. Durch eine regelbare Temperaturführung und eine zusätzliche lokale thermische, mechanische oder elektromagnetische Energieeinkopplung können die Schmelzviskositäten der einzelnen aufzutrennenden Materialkomponenten gezielt eingestellt werden. Bei der Extrusion können zudem die Drücke vor den jeweiligen Filtern angepasst und weitere Substanzen zur gezielten und selektiven Beeinflussung der Schmelzviskosität der verschiedenen Kunststoffsorten zur Unterstützung eines solchen auf Viskositätsunterschieden basierenden Auftrennungs- und Filtrationsprozesses zugegeben werden.

Mit einem solchen Ansatz können daher auch komplexe Werkstoffverbünde, wie Verbundfolien, textile Mischgewebe oder Kompositmaterialien, in die einzelnen Kunststoffsorten aufgetrennt werden und/oder Fasern des Kompositmaterials entfernt werden.

## Patentansprüche

1. Verfahren zum Trennen unterschiedlicher Kunststoffsorten (4, 7, 10) von oder in einem Materialgemisch (2) im Rahmen des Recyclings von Kunststoffmaterialien mit folgenden Schritten:
a) Zuführen des Materialgemischs (2),
b) Aufschmelzen wenigstens eines Teils des Materialgemischs (2), wobei mehrere oder alle Kunststoffsorten (4, 7, 10) im aufgeschmolzenen Teil des Materialgemischs (2) enthalten sind,
c) Separieren von einer oder mehreren Kunststoffsorten (4, 7, 10), die im aufgeschmolzenen Teil des Materialgemischs (2) enthalten sind, von dem Materialgemisch (2) anhand der spezifischen Schmelzviskosität der jeweiligen geschmolzenen Kunststoffsorte (4, 7, 10),
**dadurch gekennzeichnet, dass** zumindest der aufgeschmolzene Teil des Materialgemischs (2) nacheinander über verschiedene Filterstufen (3, 6, 9) geführt wird, wobei jede Filterstufe (3, 6, 9) zum Trennen von aufgeschmolzenen und nicht aufgeschmolzenen oder höherviskosen Teilen des Materialgemischs (2) in einem bestimmten Viskositätsbereich ausgebildet ist, wobei in jeder Filterstufe (3, 6, 9) die jeweilige Kunststoffsorte (4, 7, 10) mit der höchsten Schmelzviskosität aus dem aufgeschmolzenen Teil des Materialgemischs (2) separiert wird.

2. Verfahren nach Anspruch 1, **dadurch gekennzeichnet, dass** mehrere oder alle Kunststoffsorten (4, 7, 10), die im aufgeschmolzenen Teil des Materialgemischs (2) enthalten sind, jeweils anhand der spezifischen Schmelzviskosität der jeweiligen geschmolzenen Kunststoffsorte (4, 7, 10) einzeln separiert werden.

3. Verfahren nach Anspruch 1 oder 2, **dadurch gekennzeichnet, dass** die Filterstufen (3, 6, 9) innerhalb einer Extrusionsanlage betrieben werden.

4. Verfahren nach einem der vorhergehenden Ansprüche, **dadurch gekennzeichnet, dass** die Schmelzviskosität des aufgeschmolzenen Teils des Materialgemischs (2) oder die Schmelzviskosität zumindest einer darin enthaltenen Kunststoffsorte (4, 7, 10) durch Erzeugung zugeordneter Temperaturprofile gezielt beeinflusst wird.

5. Verfahren nach einem der vorhergehenden Ansprüche, **dadurch gekennzeichnet, dass** die Schmelzviskosität des aufgeschmolzenen Teils des Materialgemischs (2) oder die Schmelzviskosität zumindest einer darin enthaltenen Kunststoffsorte (4, 7, 10) durch Erzeugung zugeordneter Druck- bzw. Scherungsprofile gezielt beeinflusst wird.

6. Verfahren nach einem der vorhergehenden Ansprüche, **dadurch gekennzeichnet, dass** die Schmelzviskosität des aufgeschmolzenen Teils des Materialgemischs (2) oder die Schmelzviskosität zumindest einer darin enthaltenen Kunststoffsorte (4, 7, 10) durch zusätzliche lokale thermische, mechanische und/oder elektromagnetische Energieeinkopplung gezielt beeinflusst wird.

7. Verfahren nach einem der vorhergehenden Ansprüche, **dadurch gekennzeichnet, dass** die Schmelzviskosität des aufgeschmolzenen Teils des Materialgemischs (2) oder die Schmelzviskosität zumindest einer darin enthaltenen Kunststoffsorte (4, 7, 10) durch Zugabe wenigstens einer weiteren Substanz chemisch oder physikalisch gezielt beeinflusst wird.

8. Einrichtung zum Trennen unterschiedlicher Kunststoffsorten (4, 7, 10) von einem Materialgemisch (2) im Rahmen des Recyclings von Kunststoffmaterialien, wobei mehrere oder alle Kunststoffsorten (4, 7, 10) in einem aufgeschmolzenen Teil des Materialgemischs (2) enthalten sind, aufweisend eine oder mehrere hintereinander angeordnete Filterstufen (3, 6, 9), , **dadurch gekennzeichnet, dass** zumindest der aufgeschmolzene Teil des Materialgemischs (2) nacheinander über verschiedene Filterstufen (3, 6, 9) geführt ist, wobei jede Filterstufe (3, 6, 9) zum Trennen von aufgeschmolzenen und nicht aufgeschmolzenen oder höherviskosen Teilen des Materialgemischs (2) in einem bestimmten Viskositätsbereich ausgebildet ist, wobei in jeder Filterstufe (3, 6, 9) die jeweilige Kunststoffsorte (4, 7, 10) mit der höchsten Schmelzviskosität aus dem aufgeschmolzenen Teil des Materialgemischs (2) separiert wird.

9. Einrichtung nach Anspruch 8, **dadurch gekennzeichnet, dass** die Einrichtung eine Extrusionsanlage aufweist, an der die verschiedenen Filterstufen (3, 6, 9) als Filterkaskade angeordnet sind.

## Claims

1. Method for separating different types of plastic (4, 7, 10) from or in a mixture of materials (2) in the context of recycling plastic materials, comprising the following steps:
a) Feeding the material mixture (2),
b) Melting at least a part of the material mixture (2), wherein several or all types of plastic (4, 7, 10) are contained in the melted part of the material mixture (2),
c) Separating one or more types of plastic (4, 7, 10) contained in the molten part of the material mixture (2) from the material mixture (2) on the basis of the specific melt viscosity of the respective molten type of plastic (4, 7, 10),
**characterized in that** at least the molten part of the material mixture (2) is passed successively over different filter stages (3, 6, 9), each filter stage (3, 6, 9) is designed to separate melted and non-melted or higher viscosity parts of the material mixture (2) in a specific viscosity range, wherein in each filter stage (3, 6, 9) the respective type of plastic (4, 7, 10) with the highest melt viscosity is separated from the melted part of the material mixture (2).

2. Method according to claim 1, **characterized in that** several or all types of plastic (4, 7, 10) contained in the melted part of the material mixture (2) are separated individually in each case on the basis of the specific melt viscosity of the respective melted type of plastic (4, 7, 10).

3. Method according to claim 1 or 2, **characterized in that** the filter stages (3, 6, 9) are operated within an extrusion line.

4. Method according to one of the preceding claims, **characterized in that** the melt viscosity of the melted part of the material mixture (2) or the melt viscosity of at least one type of plastic (4, 7, 10) contained therein is specifically influenced by generating associated temperature profiles.

5. Method according to one of the preceding claims, **characterized in that** the melt viscosity of the melted part of the material mixture (2) or the melt viscosity of at least one type of plastic (4, 7, 10) contained therein is specifically influenced by generating associated pressure or shear profiles.

6. Method according to one of the preceding claims, **characterized in that** the melt viscosity of the melted part of the material mixture (2) or the melt viscosity of at least one type of plastic (4, 7, 10) contained therein is specifically influenced by additional local thermal, mechanical and/or electromagnetic energy coupling.

7. Method according to one of the preceding claims, **characterized in that** the melt viscosity of the melted part of the material mixture (2) or the melt viscosity of at least one type of plastic (4, 7, 10) contained therein is influenced in a chemically or physically targeted manner by adding at least one further substance.

8. Device for separating different types of plastic (4, 7, 10) from a material mixture (2) in the context of recycling plastic materials, wherein several or all types of plastic (4, 7, 10) are contained in a molten part of the material mixture (2), comprising one or more filter stages (3, 6, 9) arranged one behind the other, **characterized in that** at least the molten part of the material mixture (2) is passed successively over different filter stages (3, 6, 9), wherein each filter stage (3, 6, 9) is used for separating molten and non-molten or higher-viscosity parts of the material mixture (2) in different filter stages (3, 6, 9), 6, 9), each filter stage (3, 6, 9) being designed for separating molten and non-molten or higher-viscosity parts of the material mixture (2) in a specific viscosity range, the respective type of plastic (4, 7, 10) with the highest melt viscosity being separated from the molten part of the material mixture (2) in each filter stage (3, 6, 9).

9. Device according to claim 8, **characterized in that** the device comprises an extrusion unit on which the various filter stages (3, 6, 9) are arranged as a filter cascade.

## Revendications

1. Procédé pour séparer différents types de matière plastique (4, 7, 10) de ou dans un mélange de matériaux (2) dans le cadre du recyclage de matériaux à base de matières plastiques, comprenant les étapes suivantes consistant à :
a) alimenter le mélange de matériaux (2),
b) faire fondre au moins une partie du mélange de matériaux (2), plusieurs ou tous les types de matière plastique (4, 7, 10) étant contenus dans la partie fondue du mélange de matériaux (2),
c) séparer du mélange de matériaux (2) un ou plusieurs types de matière plastique (4, 7, 10), contenus dans la partie fondue du mélange de matériaux (2), à l'aide de la viscosité spécifique à l'état fondu du type de matière plastique fondu respectif (4, 7, 10),
**caractérisé en ce qu'**au moins la partie fondue du mélange de matériaux (2) passe successivement sur différents étages de filtration (3, 6, 9), chaque étage de filtration (3, 6, 9) étant conçu pour séparer les parties fondues et non fondues ou de viscosité supérieure du mélange de matériaux (2) dans une plage de viscosité déterminée, et dans chaque étage de filtration (3, 6, 9), on sépare de la partie fondue du mélange de matériaux (2) le type de matière plastique respectif (4, 7, 10) ayant la viscosité à l'état fondu la plus élevée.

2. Procédé selon la revendication 1,
**caractérisé en ce que** plusieurs ou tous les types de matière plastique (4, 7, 10) contenus dans la partie fondue du mélange de matériaux (2) sont séparés individuellement à l'aide de la viscosité spécifique à l'état fondu du type de matière plastique fondu respectif (4, 7, 10).

3. Procédé selon la revendication 1 ou 2,
**caractérisé en ce que** les étages de filtration (3, 6, 9) sont exploités au sein d'une installation d'extrusion.

4. Procédé selon l'une des revendications précédentes,
**caractérisé en ce que** la viscosité à l'état fondu de la partie fondue du mélange de matériaux (2) ou la viscosité à l'état fondu d'au moins un type de matière plastique (4, 7, 10) contenu dans celle-ci est influencée de manière ciblée par la création de profils de température associés.

5. Procédé selon l'une des revendications précédentes,
**caractérisé en ce que** la viscosité à l'état fondu de la partie fondue du mélange de matériaux (2) ou la viscosité à l'état fondu d'au moins un type de matière plastique (4, 7, 10) contenu dans celle-ci est influencée de manière ciblée par la création de profils de pression ou de cisaillement associés.

6. Procédé selon l'une des revendications précédentes,
**caractérisé en ce que** la viscosité à l'état fondu de la partie fondue du mélange de matériaux (2) ou la viscosité à l'état fondu d'au moins un type de matière plastique (4, 7, 10) contenu dans celle-ci est influencée de manière ciblée par une injection locale supplémentaire d'énergie thermique, mécanique et/ou électromagnétique.

7. Procédé selon l'une des revendications précédentes,
**caractérisé en ce que** la viscosité à l'état fondu de la partie fondue du mélange de matériaux (2) ou la viscosité à l'état fondu d'au moins un type de matière plastique (4, 7, 10) contenu dans celle-ci est influencée de manière ciblée, chimiquement ou physiquement, par l'ajout d'au moins une autre substance.

8. Dispositif pour séparer différents types de matière plastique (4, 7, 10) d'un mélange de matériaux (2) dans le cadre du recyclage de matériaux à base de matières plastiques, plusieurs ou tous les types de matière plastique (4, 7, 10) étant contenus dans une partie fondue du mélange de matériaux (2), comprenant un ou plusieurs étages de filtration (3, 6, 9) disposés les uns derrière les autres,
**caractérisé en ce qu'**au moins la partie fondue du mélange de matériaux (2) passe successivement sur différents étages de filtration (3, 6, 9), chaque étage de filtration (3, 6, 9) étant conçu pour séparer les parties fondues et non fondues ou de viscosité supérieure du mélange de matériaux (2) dans une plage de viscosité déterminée, et dans chaque étage de filtration (3, 6, 9), on sépare de la partie fondue du mélange de matériaux (2) le type de matière plastique respectif (4, 7, 10) ayant la viscosité à l'état fondu la plus élevée.

9. Dispositif selon la revendication 8,
**caractérisé en ce que** le dispositif comprend une installation d'extrusion au niveau de laquelle les différents étages de filtration (3, 6, 9) sont disposés sous forme de cascade de filtres.
